Europäisches Patentamt

European Patent Office

Office européen des brevets

(19)

(11) Veröffentlichungsnummer: **0 275 902 B1**

# (12) EUROPÄISCHE PATENTSCHRIFT

(45) Veröffentlichungstag der Patentschrift: **23.10.91**

(51) Int. Cl.⁵: **A01G 23/00**, B66D 1/36

(21) Anmeldenummer: **88100351.1**

(22) Anmeldetag: **13.01.88**

(54) **Vorrichtung zum Vorliefern von Holzstämmen o. dgl.**

(30) Priorität: **17.01.87 DE 3701244**

(43) Veröffentlichungstag der Anmeldung:
**27.07.88 Patentblatt 88/30**

(45) Bekanntmachung des Hinweises auf die
Patenterteilung:
**23.10.91 Patentblatt 91/43**

(84) Benannte Vertragsstaaten:
**AT BE CH DE FR LI LU**

(56) Entgegenhaltungen:
EP-A- 0 168 779          DE-C- 1 946 616
SU-A- 435 969           US-A- 2 216 263
US-A- 2 834 574         US-A- 4 411 080

(73) Patentinhaber: **Werner, Johann**
**Ehranger Strasse 102a**
**W-5500 Trier-Ehrang(DE)**

(72) Erfinder: **Werner, Johann**
**Ehranger Strasse 102a**
**W-5500 Trier-Ehrang(DE)**
Erfinder: **Treis, Hermann**
**Adolf-Kolping-Strasse**
**W-5558 Schweich(DE)**

(74) Vertreter: **Schönherr, Wolfgang et al**
**Patentanwälte Wolfgang Schönherr Dipl.-Ing.**
**Karl-Heinz Serwe Hawstrasse 28**
**W-5500 Trier(DE)**

EP 0 275 902 B1

## Beschreibung

Die Erfindung betrifft eine Vorrichtung für ein Rückefahrzeug zum Vorliefern von Holzstämmen od.dgl., mit einem um eine horizontale Schwenkachse schwenkbaren Ausleger, der an seinem freien Ende eine Rollen aufweisende, um eine im wesentlichen parallel zur Auslegerlängsrishtung verlaufende Achse schwenkbar am Ausleger angeordnete Seilführung für das Zugseil einer Seilwinde trägt und der mit einem hydraulisch betätigbaren Druckzylinder mit einer Kolbenstange verbunden ist.

Eine derartige Vorrichtung ist aus der DE-C-1 946 616 bekannt. Bei dieser Vorrichtung ist der Ausleger relativ kurz und dient so lediglich der führung der Seilführungsrollen. Ein Rücken von in nebeneinanderliegenden Gassen liegenden Baumstämmen ist bei dieser Vorrichtung nur dann möglich, wenn das Rückefahrzeug in Verlängerung der Jeweiligen Gasse in Stellung gebracht wird, so daß die zu rückenden Baumstämme dieser Gasse auf die Seilwinde zugezogen werden können. Sollen die in der Nachbargasse liegenden Seilstämme gerückt werden, so ist ein Versetzen des Rückefahrzeuges notwendig.

Die Aufgabe der Erfindung besteht darin, eine Vorrichtung der eingangs genannten Art vorzuschlagen, mit der ein Rücken von vorzugsweise in Gassen liegenden Holzstämmen od.dgl. auf einfache Art und weise möglich ist, ohne daß jeweils ein Versetzen des Rückefahrzeuges von Gasse zu Gasse erforderlich ist.

Diese Aufgabe wird dadurch gelöst, daß die Schwenkachse an einem in horizontaler Richtung verlaufenden Querträger angeordnet ist, der mit dem Druckzylinder verbunden ist und der an eine Hubvorrichtung, eine Dreipunktanhängung od.dgl. eines Rückefahrzeuges anbaubar ist und der an seinen Enden Stützfüße zum Abstützen auf dem Boden hat.

Durch die erfindungsgemäße Vorrichtung ist es möglich, mit dem Rückefahrzeug einfach am Ende der Gassen quer zu den Gassen entlang zu fahren. Das Rüchefahrzeug wird dann in der Mitte zwischen mehreren Gassen so in Stellung gebracht, daß durch Schwanken des Auslegers auf einfache weise alle Gassen erreicht werden können.

Durch die Anordung der Schwenkachse an einem in horizontaler Richtung verlaufenden Querträger, der an seinen Enden Stützfüße zum Abstützen auf dam Boden hat, ergibt sich eine hohe Stabilität bei tiefliegender Schwenhachse, insbesondere auch deshalb, weil das Rückefahrzeug als Gegengewicht dienen kann.

Eine tiefe Lage der Schwenkachse ermöglicht zu dem eine größere Länge des Auslegers, so daß mit dem Ausleger jeweils mehrere nebeneinanderliegende Gassen erreichbar sind und daher nur ein gelegentliches Versetzen bzw. Weiterfahren des Rückefahrzeuges notwendig ist.

Vorteilhaft sind die Stützfüße in vertikaler Richtung und/oder in horizontaler Richtung am Querträger verschiebbar und festlegbar geführt.

Vorzugsweise ist der Querträger im Inneren hohl ausgebildet und sind die Stützfüße an Querstreben angeordnet, die im Inneren des Querträgers verschiebbar geführt sind. Vorteilhaft weisen die Stützfüße an ihren unteren Enden die Stützfüße seitlich überragende Bodenplatten auf.

Vorteilhaft sind die Stützfüße und/oder die Querstreben hydraulisch betätigbar.

Der Ausleger ist vorteilhaft als Strebwerk ausgebildet.

Vorteilhaft hat der Ausleger zwei im spitzen Winkel miteinander verbundene Streben, von denen die kürzere Strebe über eine im stumpfen Winkel dazu verlaufende Schrägstrebe mit dem anderen Ende der längeren Strebe verbunden ist. Vorzugsweise ist die kürzere Strebe an ihrem Ende durch eine im rechten Winkel zur längeren Strebe angeordnete Stützstrebe mit der längeren Strebe verbunden.

Vorteilhaft ist am Ausleger eine Seilumlenkrolle in Höhe der Seilwinde angeordnet.

Vorzugsweise sind auf dem Querträger zwei Ausleger im Abstand zueinander um die Achse schwenkbar angeordnet.

Die Erfindung ist in den Zeichnungen beispielhaft dargestellt. Es zeigen:

Fig. 1     die erfindungsgemäße Vorrichtung in Transportstellung in Seitenansicht,

Fig. 2     die Vorrichtung nach Fig. 1 in Rückansicht,

Fig. 3     die Vorrichtung in Arbeitsstellung in Seitenansicht und

Fig. 4     die Vorrichtung nach Fig. 3 in Rückansicht.

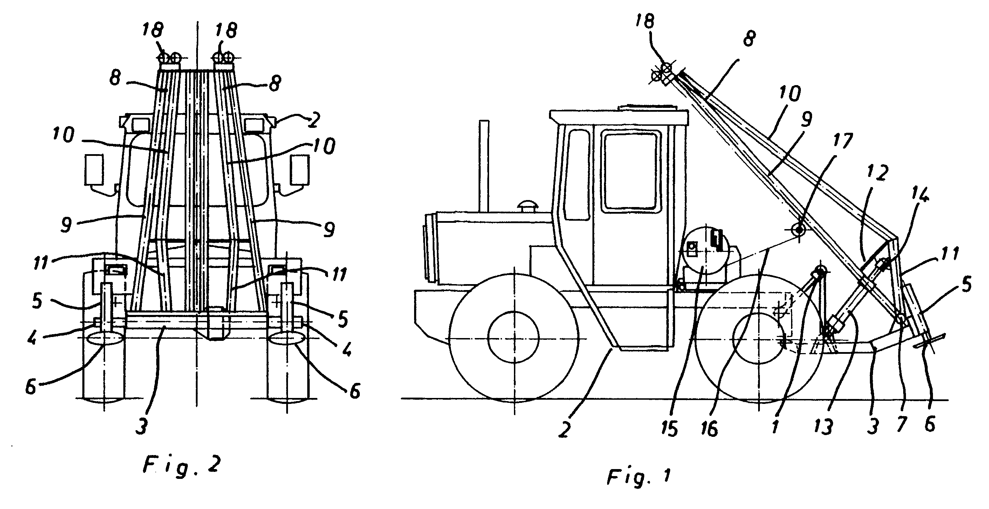

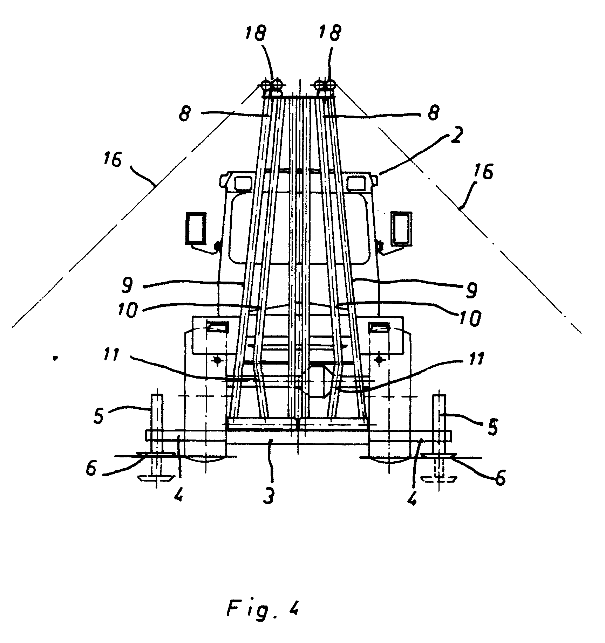

Nach den Fig. 1 bis 4 ist mit der Dreipunktanhängung (1) eines Rückefahrzeuges (2) ein in horizontaler Richtung verlaufender Querträger (3) verbunden. Der Querträger (3) ist innen hohl ausgebildet. Im Inneren des Querträgers (3) sind Querstreben (4) (Fig. 2 und 4) verschiebbar angeordnet, die nahe ihren Enden in vertikaler Richtung hydraulisch verschiebbare und festlegbare Stützfüße (5) haben. Die Stützfüße (5) weisen an ihrem unteren Ende Bodenplatten (6) auf.

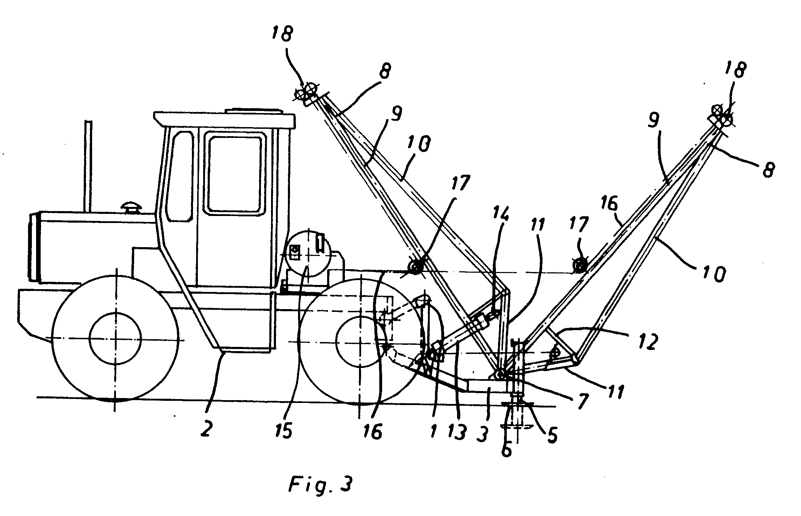

Auf dem Querträger (3) sind um eine in horizontaler Richtung verlaufende Achse (7) (Fig. 1 und 3) zwei im Abstand zueinander angeordnete Ausleger (8) schwenkbar angeordnet. Die Ausleger (8) sind als Strebwerk mit zwei im spitzen Winkel zueinander verlaufenden Streben (9) und (10) ausgebildet. Die längere Strebe (9) ist um die Achse (7) schwenkbar. Wie die Fig. 1 bis 4 zeigen, ist die kürzere Strebe (10) über eine im stumpfen Winkel zu ihr verlaufende Schrägstrebe (11) im Abstand von der längeren Strebe (9) um die Achse (7) schwenkbar angeordnet. Die längere Strebe (9) ist ferner durch eine im rechten Winkel zur längeren Strebe angeordnete Stützstrebe (12) mit dem Ende der kürzeren Strebe (10) und der Schrägstrebe (11) verbunden. Durch diese Ausbildung erhalten die Ausleger (8) in allen Richtungen eine hohe Stabilität.

Mit dem Querträger (3) ist weiterhin ein hydraulisch betätigbarer Druckzylinder verbunden, dessen Kolbenstange (14) mit der Schrägstrebe (11) verbunden ist.

Auf dem Rückefahrzeug (2) sind zwei unabhängig voneinander betätigbare Seilwinden (15) angeordnet, deren Zugseile (16) über an den Auslegern (8) etwa in Höhe der Seilwinden (15) angeordnete Seilumlenkrollen (17) geführt sind.

Die Ausleger (8) tragen an ihren Enden Rollen aufweisende Seilführungen (18), die um in Auslegerlängsrichtung verlaufende Achsen schwenkbar sind.

Zum Transport der Vorrichtung ist der Querträger (3) über die Dreipunktanhängung (1) angehoben, wie dies Fig. 1 und 2 zeigen. Die Querstreben (4) sind in den Querträger (3) eingeschoben, ebenso sind die Stützfüße (5) angehoben. Die Ausleger (8) sind mit Hilfe der Druckzylinder (12) nach vorne zum Rückefahrzeug (2) geschwenkt.

Zum Rücken wird nach Ausziehen der Querstreben (4) und dem Absetzen der Stützfüße (5) der Querträger (3) nach unten geschwenkt, so daß sich die Stützfüße (5) fest auf dem Boden abstützen. Die Ausleger (8) können nun mit Hilfe der Druckzylinder (12) unabhängig voneinander in die jeweils gewünschte Position geschwenkt werden, so daß über beide Ausleger mit Hilfe der Zugseile unabhängig voneinander das Vorliefern der Holzstämme erfolgen kann.

Die erfindungsgemäße Vorrichtung ist kostengünstig herstellbar, da sie an ein übliches Rückegerät anbaubar ist und keine besondere Seilwinde notwendig ist. Dadurch, daß die Vorrichtung auf dem Boden abstützbar ist, ergibt sich eine hohe Stabilität bei tiefliegendem Schwerpunkt, insbesondere auch deshalb, weil das Rückefahrzeug (2) als Gegengewicht dient. Die tiefe Lage des Schwerpunktes ermöglicht zudem eine größere Länge der Ausleger (8), so daß mit den Auslegern große Reichweiten erzielbar sind und nur ein gelegentliches Versetzen des Rückefahrzeuges (2) notwendig ist.

**Patentansprüche**

1. Vorrichtung für ein Rückefahrzeug zum Vorliefern von Holzstämmen od.dgl., mit einem um eine horizontale Schwenkachse schwenkbaren Auslager, der an seinem freien Ende eine Rollen aufweisende, um eine im wesentlichen parallel zur Auslegerlängsrichtung verlaufende Achse schwenkbar am Ausleger angeordnete Seilführung für das Zugseil einer Seilwinde trägt und dar mit einem hydraulisch betätigkbaren Druckzylinder mit einer Kolbenstange verbunden ist, dadurch gekennzeichnet, daß die Schwankachse (7) an einem in horizontaler Richtung verlaufenden Querträger (3) angeordnet ist, der mit dem Druckzylinder verbunden ist und der an eine Hubvorrichtung, eine Dreipunktanhängung (1) od.dgl. eines Rückefahrzeuges (2) anbaubar ist und der an seinen Enden Stützfüße (5) zum Abstützen auf dem Boden hat.

2. Vorrichtung nach Anspruch 1, dadurch gekennzeichnet, daß die Stützfüße (5) in vertikaler Richtung und/oder in horizontaler Richtung am Querträger (3) verschiebbar und festlegbar geführt sind.

3. Vorrichtung nach Anspruch 1 oder 2, dadurch gekennzeichnet, daß der Querträger (3) im Inneren hohl ausgebildet ist und die Stützfüße (5) an Querstreben (4) angeordnet sind, die im Inneren des Querträgers verschiebbar geführt sind.

4. Vorrichtung nach einem der Ansprüche 1 bis 3, dadurch gekennzeichnet, daß die Stützfüße (5) an ihren unteren Enden die Stützfüße seitlich überragende Bodenplatten (6) aufweisen.

5. Vorrichtung nach einem der Ansprüche 1 bis 4, dadurch gekennzeichnet, daß die Stützfüße (5) und/oder die Querstreben (4) hydraulisch betätigbar sind.

6. Vorrichtung nach einem der Ansprüche 1 bis 5, dadurch gekennzeichnet, daß der Ausleger (8) als Strebwerk ausgebildet ist.

7. Vorrichtung nach Anspruch 6, dadurch gekennzeichnet, daß der Ausleger (8) zwei im spitzen Winkel miteinander verbundene Streben (9, 10) hat, von denen die kürzere Strebe (10) über eine im stumpfen Winkel dazu verlaufende Schrägstrebe (11) im Abstand von der längeren Strebe (9) um die Achse (7) schwenkbar angeordnet ist.

8. Vorrichtung nach Anspruch 7, dadurch gekennzeichnet, daß die kürzere Strebe (10) an ihrem Ende durch eine im rechten Winkel zur längeren Strebe (8) angeordnete Stützstrebe (12) mit der längeren Strebe verbunden ist.

9. Vorrichtung nach einem der Ansprüche 1 bis 8, dadurch gekennzeichnet, daß am Ausleger (8) eine Seilumlenkrolle (17) in Höhe der Seilwinde (15) angeordnet ist.

10. Vorrichtung nach einem der Ansprüche 1 bis 9, dadurch gekennzeichnet, daß auf dem Querträger (3) zwei Ausleger (8) im Abstand zueinander um die Achse (7) unabhängig voneinander schwenkbar angeordnet sind.

## Claims

1. A device for a pulling vehicle for dragging along trunks or the like, comprising a boom which is pivotable around a horizontal pivot axis and has at its free end a rope guide for the pull rope of a rope winch, the guide having rollers and being arranged on the boom to be pivotable around an axis which is substantially parallel to the longitudinal direction of the boom, and which is connected to a hydraulically operated pressure cylinder with a piston rod, **characterised in that** the pivot axis (7) is arranged on a transverse support (3) which extends in a horizontal direction and is connected to the pressure cylinder and which can be attached to a lifting means, a three-point linkage (1) or the like of a pulling vehicle (2), and which has support feet (5) at its ends for support on the ground.

2. A device according to claim 1, **characterised in that** the support feet (5) are displacable and fixable relative to the transverse support (3) in the vertical direction and/or in the horizontal direction.

3. A device according to claim 1 or 2, **characterised in that** the transverse support (3) is internally hollow, and in that the support feet (5) are mounted upon transverse elements (4) which are displacably guided inside the transverse support.

4. A device according to one of claims 1 to 3, **characterised in that** the support feet (5) have laterally protruding bottom plates (6) at their lower ends.

5. A device according to one of claims 1 to 4, **characterised in that** the support feet (5) and/or the transverse elements (4) are hydraulically operated.

6. A device according to one of claims 1 to 5, **characterised in that** the boom (8) is a strut arrangement.

7. A device according to claim 6, **characterised in that** the boom (8) has two struts (9, 10) which are interconnected at an acute angle, the shorter of which (10) is arranged to be pivotable around the axis (7) by way of an inclined strut (11), which extends at an obtuse angle thereto, at a distance from the longer strut (9).

8. A device according to claim 7, **characterised in that** the shorter strut (10) is connected at its end to the longer strut by means of a support strut (12) which is arranged at right angles relative to the longer strut (8).

9. A device according to one of claims 1 to 8, **characterised in that** a rope-guiding roller (17) is mounted on the boom (8) at the height of the rope winch (15).

10. A device according to one of claims 1 to 9, **characterised in that** on the transverse support (3) two booms (8) are arranged at a distance to each other and pivotably independent of each other on the axis (7).

## Revendications

1. Dispositif pour attirer des fûts ou analogues avec un bras de levier pivotant suivant un axe d'articulation horizontal, qui est muni à son extrémité libre d'un guidage de câble, pour le câble tracteur d'un treuil, ce guidage présentant une poutre et pouvant pivoter suivant un axe sensiblement parallèle à la direction longitudinale du bras de levier, qui est relié à un vérin hydraulique par sa tige de piston, caractérisé en ce que l'axe d'articulation (7) est situé sur une traverse (3) horizontale reliée au vérin de pression et qui peut être montée sur un dispositif de levage, une suspension à trois points (1) ou autre d'un véhicule (2) à chargement arrière, la traverse comportant à ses extrémités des pièces d'appui (5) pour prendre appui sur le sol.

2. Dispositif suivant la revendication 1, caractérisé en ce que les pièces d'appui (5) sont réglables et déplaçables dans le sens vertical et/ou dans le sens horizontal sur la traverse (3).

3. Dispositif suivant l'une des revendications 1 ou 2, caractérisé en ce que la traverse (3) est creuse et que les pièces d'appui (5) sont disposés sur des entretoises (4), qui sont mobiles à l'intérieur de la traverse.

4. Dispositif suivant l'une quelconque des revendications 1 à 3, caractérisé en ce que les pièces d'appui (5) présentent à leurs extrémités inférieures des semelles (6) dépassant latéralement.

5. Dispositif suivant l'une quelconque des revendications 1 à 4, caractérisé en ce que les pièces d'appui (5) et/ou les entretoises (4) sont commandées hydrauliquement.

6. Dispositif suivant l'une quelconque des revendications 1 à 5, caractérisé en ce que le bras de levier (8) est conçu sous forme de poutre en V.

7. Dispositif suivant la revendication 6, caractérisé en ce que le bras de levier (8) comporte deux jambes de force (9, 10) déterminant entre elles un angle, et dont la jambe de force (10) la plus courte est disposée de manière à pivoter autour de l'axe (7) par l'intermédiaire d'une jambe oblique (11) formant un angle obtus avec elle, à une certaine distance par rapport à la jambe de force (9) la plus longue.

8. Dispositif suivant la revendication 7, caractérisé en ce que l'extrémité de la jambe de force (10) la plus courte est reliée à la jambe de force la plus longue (9) par une entretoise (12) perpendiculaire à la jambe la plus longue.

9. Dispositif suivant l'une quelconque des revendications 1 à 8, caractérisé en ce qu'une poutre de guidage de câble (17) est disposée sur le bras de levier (8) à la hauteur du treuil à câble (15).

10. Dispositif suivant l'une quelconque des revendications 1 à 9, caractérisé en ce que sont disposés sur la traverse (3) deux bras de levier (8) avec un espace entre eux de manière à pouvoir pivoter indépendamment l'un de l'autre autour de l'axe (7).

Fig. 1

Fig. 2

Fig. 3

Fig. 4